(19) Europäisches Patentamt / European Patent Office / Office européen des brevets

(11) **EP 3 978 269 B1**

(12) **EUROPEAN PATENT SPECIFICATION**

(45) Date of publication and mention of the grant of the patent:
**11.03.2026 Bulletin 2026/11**

(21) Application number: **20832761.9**

(22) Date of filing: **29.05.2020**

(51) International Patent Classification (IPC):
***B60C 1/00*** (2006.01) ***C08K 5/20*** (2006.01) ***C08K 5/548*** (2006.01) ***C08K 3/013*** (2018.01) ***C08K 3/04*** (2006.01) ***C08K 3/36*** (2006.01) ***C08L 21/00*** (2006.01)

(52) Cooperative Patent Classification (CPC):
(C-Sets available)
**B60C 1/0016;** C08K 2003/2227 (Cont.)

(86) International application number:
**PCT/JP2020/021277**

(87) International publication number:
**WO 2020/261874 (30.12.2020 Gazette 2020/53)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2019 JP 2019119828**

(43) Date of publication of application:
**06.04.2022 Bulletin 2022/14**

(73) Proprietor: **Sumitomo Rubber Industries, Ltd. Kobe-shi, Hyogo 651-0072 (JP)**

(72) Inventors:
- **KOMORI, Yoshihiko Kobe-shi, Hyogo 651-0072 (JP)**
- **MIYAZAKI, Tatsuya Kobe-shi, Hyogo 651-0072 (JP)**

(74) Representative: **Manitz Finsterwald Patent- und Rechtsanwaltspartnerschaft mbB Martin-Greif-Straße 1 80336 München (DE)**

(56) References cited:
**WO-A1-2014/178336**
**WO-A1-2018/105230**
**JP-A- 2012 525 465**
**JP-A- 2013 018 812**
**JP-A- 2015 157 878**
**JP-A- 2019 034 992**
**US-A1- 2016 052 340**
**US-A1- 2018 371 216**

EP 3 978 269 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets

**C08L 9/06, C08L 9/06, C08L 9/00, C08L 91/00, C08L 25/16, C08L 71/02, C08L 91/08, C08L 45/00, C08K 3/04, C08K 3/36, C08K 5/548, C08K 5/098, C08K 5/20, C08K 5/09, C08K 5/18, C08K 3/22, C08K 3/06, C08K 5/47, C08K 5/31;**
**C08L 9/06, C08L 9/06, C08L 9/00, C08L 91/00, C08L 25/16, C08L 83/08, C08L 91/08, C08L 45/00, C08K 3/04, C08K 3/36, C08K 5/548, C08K 5/098, C08K 5/20, C08K 5/09, C08K 5/18, C08K 3/22, C08K 3/06, C08K 5/47, C08K 5/31;**
**C08L 9/06, C08L 9/06, C08L 9/00, C08L 91/00, C08L 25/16, C08L 91/08, C08L 45/00, C08K 3/04, C08K 3/36, C08K 5/548, C08K 5/098, C08K 5/20, C08K 5/09, C08K 5/18, C08K 3/22, C08K 3/06, C08K 5/47, C08K 5/31**

## Description

TECHNICAL FIELD

The present disclosure relates to a tire.

BACKGROUND ART

Wet grip performance is known to improve when a large amount of silica or softeners is incorporated (see, for example, Patent Literature 1). In this case, however, the tensile resistance and thus the abrasion resistance of the rubber compositions tend to deteriorate due to their reduced polymer component content. Further prior art rubber compositions for a tire comprising a rubber component, a silane coupling agent and a resin are disclosed in US 2016 / 052 340 A1 and US 2018 / 371 216 A1. Additionally, a rubber composition for a tire comprising a rubber component and a silane coupling agent is disclosed in WO 2018 / 105 230 A1.

Moreover, abrasion resistance is known to improve when mercapto silane coupling agents are used as silane coupling agents incorporated together with silica (see, for example, Patent Literature 2).

CITATION LIST

PATENT LITERATURE

Patent Literature 1: JP 6033786 B
Patent Literature 2: JP 2012-122015 A

SUMMARY OF DISCLOSURE

TECHNICAL PROBLEM

However, when a large amount of silica or softeners is incorporated to improve wet grip performance, sufficient abrasion resistance may not be ensured using mercapto silane coupling agents.

The present disclosure aims to solve the above problem and provide a tire which provides improved overall performance in terms of wet grip performance and abrasion resistance.

SOLUTION TO PROBLEM

In the studies on techniques for solving the above problem, the present inventors focused on the ash components derived from silica, zinc oxide, aluminum hydroxide, magnesium sulfate, processing aids, etc. in rubber compositions. Then, the inventors have found that the ash content highly correlates with wet grip performance, and wet grip performance tends to be improved by increasing the ash content. However, when the ash content is increased, the rubber compositions may become too hard, resulting in reduced abrasion resistance.

Hence, the inventors made further studies and focused on the sulfur content of vulcanized rubber compositions after acetone extraction. The amount of sulfur involved in crosslinking can be estimated from the sulfur content after acetone extraction because it is considered that the sulfur elements involved in crosslinking, among the sulfur elements contained in the rubber compositions, are bound to polymers, vulcanization accelerators, or zinc oxide and thus will not be eluted by acetone extraction.

Thus, when the sulfur content after acetone extraction, i.e., the amount of sulfur elements involved in crosslinking, is reduced, the amount of polysulfide bonds crosslinking polymer chains is reduced, and therefore the amount of sulfur atoms released in the rubbers during use is reduced. As a result, the rubber compositions are less likely to harden with time, and good abrasion resistance can be ensured even when the ash content is increased to provide both wet grip performance and abrasion resistance. Based on this finding, the inventors arrived at the present disclosure.

Specifically, the present disclosure relates to a tire, including a tread containing a rubber composition, the rubber composition containing at least one rubber component and at least one silane coupling agent having a sulfur content of 10% by mass or higher and at least one liquid resin, the rubber composition having an ash content of 36% by mass or higher, the rubber composition having a sulfur content of 1.0% by mass or lower when measured after acetone extraction, wherein the ash content and the sulfur content are determined by the methods defined in the description.

Preferably, the sulfur content of the rubber composition is 0.90% by mass or lower.

Preferably, an amount of silica in the rubber composition is 110 parts by mass or more per 100 parts by mass of the at least one rubber component.
Preferably, the silane coupling agent has a polysulfide group.
Preferably, an amount of carbon black in the rubber composition is 10 parts by mass or less per 100 parts by mass of the at least one rubber component.
Preferably, an amount of at least one nonionic surfactant having a SP value of 9.0 or higher or at least one amide compound in the rubber composition is 0.1 parts by mass or more per 100 parts by mass of the at least one rubber component.
Preferably, the rubber composition contains at least one inorganic filler selected from the group consisting of aluminum hydroxide, alumina, zirconium oxide, magnesium sulfate, aluminum silicate, potassium carbonate, and silicon carbide.
Preferably, the rubber composition contains at least one solid resin.

ADVANTAGEOUS EFFECTS OF DISCLOSURE

The tire according to the present disclosure includes a tread containing a rubber composition which contains at least one rubber component and at least one silane coupling agent having a sulfur content of 10% by mass or higher and at least one liquid resin, and which has an ash content of 36% by mass or higher and further has a sulfur content of 1.0% by mass or lower when measured after acetone extraction. Such a tire provides improved overall performance in terms of wet grip performance and abrasion resistance.

DESCRIPTION OF EMBODIMENTS

The tire according to the present disclosure includes a tread containing a rubber composition which contains at least one rubber component and at least one silane coupling agent having a sulfur content of 10% by mass or higher and at least one liquid resin, and which has an ash content of 36% by mass or higher and further has a sulfur content of 1.0% by mass or lower when measured after acetone extraction.
Since the rubber composition contains one or more rubber components and one or more silane coupling agents having a sulfur content of 10% by mass or higher and also has a predetermined ash content or higher, it provides excellent wet grip performance. Moreover, although an increased ash content may result in reduced abrasion resistance, as described earlier, the rubber composition has a predetermined sulfur content or lower when measured after acetone extraction, and thus is less likely to harden with time, resulting in excellent abrasion resistance. Because of the above-mentioned actions, it is believed that the rubber composition provides improved overall performance in terms of wet grip performance and abrasion resistance.
Moreover, the use of the silane coupling agents having a sulfur content of 10% by mass or higher tends to provide good processability as well.
Although it is sufficient that the rubber composition has an ash content of 36% by mass or higher, the ash content is preferably 37% by mass or higher, more preferably 38% by mass or higher, but is preferably 55% by mass or lower, more preferably 50% by mass or lower, still more preferably 44% by mass or lower. When the ash content is within the range indicated above, the advantageous effect tends to be better achieved.
As described earlier, the ash components are derived from silica, zinc oxide, aluminum hydroxide, magnesium sulfate, processing aids, etc. in the rubber composition. The ash content can be controlled by the amounts of these components.
Moreover, the ash content can be measured as described later in EXAMPLES.
Although it is sufficient that the rubber composition has a sulfur content of 1.0% by mass or lower when measured after acetone extraction, the sulfur content is preferably 0.90% by mass or lower, but is preferably 0.65% by mass or higher, more preferably 0.76% by mass or higher, still more preferably 0.84% by mass or higher. When the sulfur content is within the range indicated above, the advantageous effect tends to be better achieved.
As described earlier, the sulfur content after acetone extraction is considered to be derived from the sulfur elements involved in crosslinking, specifically the sulfur elements contained in powdered sulfur, hybrid crosslinking agents, vulcanization accelerators, silane coupling agents, and the like. The sulfur content after acetone extraction can be controlled by the amounts of these components. It is considered that the sulfur elements contained in process oils, resins, and the like do not participate in crosslinking and may be removed by acetone extraction.
Moreover, the sulfur content after acetone extraction can be measured as described later in EXAMPLES.
Examples of rubber components which may be used in the rubber composition include diene rubbers such as isoprene-based rubbers, polybutadiene rubbers (BR), styrene-butadiene rubbers (SBR), styrene-isoprene-butadiene rubbers (SIBR), acrylonitrile-butadiene rubbers (NBR), chloroprene rubbers (CR), and butyl rubbers (IIR). The rubber components may be used alone or in combinations of two or more. SBR, BR, and isoprene-based rubbers are preferred

among these, with SBR and/or BR being more preferred.

The term "rubber component" refers to a polymer preferably having a weight average molecular weight (Mw) of 150,000 or more, more preferably 350,000 or more. The upper limit of the Mw is not limited, but it is preferably 4,000,000 or less, more preferably 3,000,000 or less.

Any SBR may be used, and examples include those commonly used in the tire industry such as emulsion-polymerized SBR (E-SBR) and solution-polymerized SBR (S-SBR). These may be used alone or in combinations of two or more.

The styrene content of the SBR is preferably 5% by mass or higher, more preferably 10% by mass or higher, still more preferably 15% by mass or higher, but is preferably 50% by mass or lower, more preferably 40% by mass or lower, still more preferably 35% by mass or lower. When the styrene content is within the range indicated above, the advantageous effect tends to be better achieved.

The vinyl content of the SBR is preferably 10% by mass or higher, more preferably 15% by mass or higher, but is preferably 50% by mass or lower, more preferably 40% by mass or lower. When the vinyl content is within the range indicated above, the advantageous effect tends to be better achieved.

The SBR may be either unmodified or modified SBR.

The modified SBR may be any SBR having a functional group interactive with a filler such as silica. Examples include chain end-modified SBR obtained by modifying at least one chain end of SBR with a compound (modifier) having the functional group (i.e., chain end-modified SBR terminated with the functional group); backbone-modified SBR having the functional group in the backbone; backbone- and chain end-modified SBR having the functional group in both the backbone and chain end (e.g., backbone- and chain end-modified SBR in which the backbone has the functional group and at least one chain end is modified with the modifier); and chain end-modified SBR into which a hydroxy or epoxy group has been introduced by modification (coupling) with a polyfunctional compound having two or more epoxy groups in the molecule. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups.

The SBR may be commercially available from Sumitomo Chemical Co., Ltd., JSR Corporation, Asahi Kasei Corporation, Zeon Corporation, etc.

The amount of the SBR based on 100% by mass of the rubber components is preferably 40% by mass or more, more preferably 50% by mass or more, still more preferably 70% by mass or more, particularly preferably 80% by mass or more, but is preferably 95% by mass or less, more preferably 90% by mass or less. When the amount is within the range indicated above, the advantageous effect tends to be better achieved.

Any BR may be used including those commonly used in the tire industry. Examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and tin-modified polybutadiene rubbers (tin-modified BR) obtained by modification with tin compounds. These may be used alone or in combinations of two or more. To maintain good wet grip performance and simultaneously further improve abrasion resistance, rare earth-catalyzed BR is preferred among these.

Rare earth-catalyzed BR refers to polybutadiene rubbers synthesized using rare earth catalysts and features a high cis content and a low vinyl content. The rare earth-catalyzed BR may be ones generally used in tire production.

Known rare earth catalysts may be used. Examples include catalysts containing lanthanide rare earth compounds, organoaluminum compounds, aluminoxanes, or halogen-containing compounds, optionally with Lewis bases. Neodymium (Nd) catalysts using Nd-containing compounds as lanthanide rare earth compounds are preferred among these.

The cis content of the BR is preferably 90% by mass or higher, more preferably 93% by mass or higher, still more preferably 95% by mass or higher. The upper limit is not limited. When the cis content is within the range indicated above, the advantageous effect tends to be better achieved.

The vinyl content of the BR is preferably 1.8% by mass or lower, more preferably 1.0% by mass or lower, still more preferably 0.5% by mass or lower, particularly preferably 0.3% by mass or lower. When the vinyl content is within the range indicated above, the advantageous effect tends to be better achieved.

The BR may be either unmodified or modified BR.

Examples of the modified BR include those into which the above-listed functional groups are introduced. Preferred embodiments are as described for the modified SBR.

The BR may be commercially available from Ube Industries, Ltd., JSR Corporation, Asahi Kasei Corporation, Zeon Corporation, etc.

The amount of the BR based on 100% by mass of the rubber components is preferably 5% by mass or more, more preferably 10% by mass or more, but is preferably 60% by mass or less, more preferably 50% by mass or less, still more preferably 30% by mass or less, particularly preferably 20% by mass or less. When the amount is within the range indicated above, the advantageous effect tends to be better achieved.

The combined amount of the SBR and BR based on 100% by mass of the rubber components is preferably 30% by mass or more, more preferably 50% by mass or more, still more preferably 70% by mass or more, particularly preferably 90% by mass or more, and may be 100% by mass. When the combined amount is within the range indicated above, the advantageous effect tends to be better achieved.

Examples of the isoprene-based rubbers include natural rubbers (NR), polyisoprene rubbers (IR), refined NR, modified NR, and modified IR. The NR may be ones commonly used in the tire industry such as SIR20, RSS#3, and TSR20. Any IR may be used, and examples include those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more. Natural rubbers are preferred among these.

Herein, the weight average molecular weight (Mw) and number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Moreover, the cis content (cis-1,4-butadiene unit content) and vinyl content (1,2-butadiene unit content) can be determined by infrared absorption spectrometry. The styrene content can be determined by $^1H$-NMR analysis.

The rubber composition preferably contains one or more reinforcing fillers including silica.

Examples of the silica include dry silica (silicic anhydride) and wet silica (hydrous silicic acid). Wet silica is preferred because it has a large number of silanol groups. These may be used alone or in combinations of two or more.

The nitrogen adsorption specific surface area ($N_2SA$) of the silica is preferably 60 $m^2/g$ or more, more preferably 150 $m^2/g$ or more, still more preferably 220 $m^2/g$ or more, but is preferably 320 $m^2/g$ or less, more preferably 280 $m^2/g$ or less. When the $N_2SA$ is within the range indicated above, the advantageous effect tends to be better achieved. In particular, the use of the silica having a $N_2SA$ of 220 $m^2/g$ or more can maintain good wet grip performance and simultaneously further improve abrasion resistance.

The nitrogen adsorption specific surface area of the silica is measured by a BET method in accordance with ASTM D3037-81.

The silica may be commercially available from Degussa, Rhodia, Tosoh Silica Corporation, Solvay Japan, Tokuyama Corporation, etc.

The amount of the silica per 100 parts by mass of the rubber components is preferably 90 parts by mass or more, more preferably 110 parts by mass or more, still more preferably 130 parts by mass or more, but is preferably 200 parts by mass or less, more preferably 180 parts by mass or less, still more preferably 160 parts by mass or less. When the amount is within the range indicated above, the advantageous effect tends to be better achieved.

The amount of the silica based on 100% by mass of the reinforcing fillers is preferably 50% by mass or more, more preferably 60% by mass or more, still more preferably 70% by mass or more, particularly preferably 80% by mass or more. The upper limit is not limited and may be 100% by mass, but it is preferably 98% by mass or less.

The rubber composition contains one or more silane coupling agents having a sulfur content of 10% by mass or higher.

Examples of the silane coupling agents include silane coupling agents having a polysulfide group (sulfide silane coupling agents), such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl) trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, and 2-triethoxysilylethyl-N,N-dimethylthiocarbamoyltetrasulfide. Each of these may be used alone, or two or more of these may be used in combination. Preferred among these are bis(3-triethoxysilylpropyl)tetrasulfide and/or bis(3-triethoxysilylpropyl)disulfide.

Although it is sufficient that the silane coupling agents have a sulfur content of 10% by mass or higher, the sulfur content is preferably 12% by mass or higher, more preferably 14% by mass or higher, but is preferably 25% by mass or lower.

The sulfur content of the silane coupling agents can be measured by a method as described in "Sulfur content after acetone extraction" shown later in EXAMPLES.

The amount of the silane coupling agents per 100 parts by mass of the silica is preferably 3 parts by mass or more, more preferably 5 parts by mass or more, but is preferably 20 parts by mass or less, more preferably 15 parts by mass or

less. When the amount is within the range indicated above, the advantageous effect tends to be better achieved.

In addition to the above-described silane coupling agents (silane coupling agents having a sulfur content of 10% by mass or higher), the rubber composition may contain other silane coupling agents (silane coupling agents having a sulfur content of lower than 10% by mass).

Examples of such other silane coupling agents include mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Each of these may be used alone, or two or more of these may be used in combination.

The silane coupling agents may be commercially available from Degussa, Momentive, Shin-Etsu Silicone, Tokyo Chemical Industry Co., Ltd., AZmax. Co., Dow Corning Toray Co., Ltd., etc.

The rubber composition may contain one or more reinforcing fillers including carbon black.

Any carbon black may be used, and examples include N134, N110, N220, N234, N219, N339, N330, N326, N351, N550, and N762. These may be used alone or in combinations of two or more.

The nitrogen adsorption specific surface area ($N_2SA$) of the carbon black is preferably 80 $m^2/g$ or more, more preferably 100 $m^2/g$ or more, but is preferably 200 $m^2/g$ or less, more preferably 150 $m^2/g$ or less. When the $N_2SA$ is within the range indicated above, the advantageous effect tends to be better achieved.

Herein, the $N_2SA$ of the carbon black is measured in accordance with JIS K6217-2:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

To suppress cracking caused by ultraviolet rays, the amount of the carbon black per 100 parts by mass of the rubber components is preferably 3 parts by mass or more, more preferably 5 parts by mass or more, but is preferably 20 parts by mass or less, more preferably 10 parts by mass or less. The carbon black and the polymers together form a thick gel layer. The gel layer improves abrasion resistance, but is inferior in wet grip performance to silica. When the amount of the carbon black is within the range indicated above, good wet grip performance and good abrasion resistance tend to be ensured.

The rubber composition preferably contains one or more nonionic surfactants having a SP value of 9.0 or higher and/or one or more amide compounds.

Any amide compound may be used, and examples include fatty acid amides and fatty acid amide esters. These may be used alone or in combinations of two or more. Fatty acid amides are preferred among these, with mixtures of fatty acid amides with fatty acid amide esters being more preferred.

Mixtures of amide compounds with fatty acid metal salts may also be used.

Examples of the metals of the fatty acid metal salts include potassium, sodium, magnesium, calcium, barium, zinc, nickel, and molybdenum. Each of these may be used alone, or two or more of these may be used in combination. Alkaline earth metals such as calcium and zinc are preferred among these, with calcium being more preferred.

The fatty acids of the fatty acid metal salts may be saturated or unsaturated fatty acids. Examples of the saturated fatty acids include decanoic acid, dodecanoic acid, and stearic acid. Examples of the unsaturated fatty acids include oleic acid and elaidic acid. Each of these may be used alone, or two or more of these may be used in combination. Saturated fatty acids are preferred among these, with stearic acid being more preferred. Oleic acid is also preferred among the unsaturated fatty acids.

The fatty acid amides may be saturated or unsaturated fatty acid amides. Examples of the saturated fatty acid amides include stearamide and behenamide. Examples of the unsaturated fatty acid amides include oleamide and erucamide. Each of these may be used alone, or two or more of these may be used in combination. Unsaturated fatty acid amides are preferred among these, with oleamide being more preferred.

The fatty acid amide esters may be saturated or unsaturated fatty acid amide esters. Examples of the saturated fatty acid amide esters include stearic acid amide esters and behenic acid amide esters. Examples of the unsaturated fatty acid amide esters include oleic acid amide esters and erucic acid amide esters. Each of these may be used alone, or two or more of these may be used in combination. Unsaturated fatty acid amide esters are preferred among these, with oleic acid amide esters being more preferred.

The amide compounds may be commercially available from NOF Corporation, Struktol, Lanxess, etc.

The amount of the amide compounds per 100 parts by mass of the rubber components is preferably 0.1 parts by mass or more, more preferably 0.5 parts by mass or more, still more preferably 1 part by mass or more, but is preferably 4 parts by mass or less, more preferably 2 parts by mass or less. When the amount is within the range indicated above, the bleed layer on the tread surface tends to become soft so that good initial grip performance can be obtained.

Herein, the amount of the amide compounds, when in the form of mixtures with fatty acid metal salts, also includes the amount of the fatty acid metal salts contained in the amide compounds.

When fatty acid metal salts are incorporated separately from the amide compounds, the amount of the fatty acid metal salts is preferably 0.1 parts by mass or more, more preferably 0.5 parts by mass or more, still more preferably 1 part by mass or more, but is preferably 4 parts by mass or less, more preferably 2 parts by mass or less. When the amount is within the range indicated above, abrasion resistance tends to be less impaired.

Non-limiting examples of the nonionic surfactants (nonionic surfactants having a SP value of 9.0 or higher) include nonionic surfactants represented by the formula (1) below; nonionic surfactants represented by the formula (2) below; Pluronic type nonionic surfactants; sorbitan fatty acid esters such as polyoxyethylene sorbitan monostearate, polyoxyethylene sorbitan monooleate, polyoxyethylene sorbitan monopalmitate, polyoxyethylene sorbitan trioleate, polyoxyethylene sorbitan tristearate, and polyoxyethylene sorbitan tripalmitate; and polyoxyethylene alkyl ethers such as polyoxyethylene dodecyl ether, polyoxyethylene lauryl ether, polyoxyethylene 2-ethylhexyl ether, polyoxyethylene oleyl ether, ethylene glycol dibutyl ether, ethylene glycol dilauryl ether, ethylene glycol di-2-ethylhexyl ether, and ethylene glycol dioleyl ether. Each of these may be used alone, or two or more of these may be used in combination. Pluronic type nonionic surfactants are preferred among these.

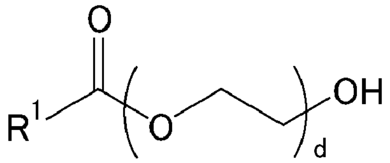

(1)

In formula (1), $R^1$ represents a C6-C26 hydrocarbon group, and d represents an integer.

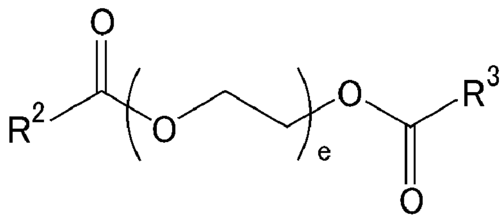

(2)

In formula (2), $R^2$ and $R^3$ are the same as or different from each other and each represent a C6-C26 hydrocarbon group, and e represents an integer.

Examples of the nonionic surfactants of formula (1) include ethylene glycol monooleate, ethylene glycol monopalmeate, ethylene glycol monopalmitate, ethylene glycol monovaccenate, ethylene glycol monolinoleate, ethylene glycol monolinolenate, ethylene glycol monoarachidonate, ethylene glycol monostearate, ethylene glycol monocetylate, and ethylene glycol monolaurate.

Examples of the nonionic surfactants of formula (2) include ethylene glycol dioleate, ethylene glycol dipalmeate, ethylene glycol dipalmitate, ethylene glycol divaccenate, ethylene glycol dilinoleate, ethylene glycol dilinolenate, ethylene glycol diarachidonate, ethylene glycol distearate, ethylene glycol dicetylate, and ethylene glycol dilaurate.

The Pluronic type nonionic surfactants are also known as polyoxyethylene polyoxypropylene glycols, polyoxyethylene polyoxypropylene block polymers, or polypropylene glycol ethylene oxide adducts, and are generally represented by the formula (3) below. As shown in formula (3), the Pluronic type nonionic surfactants contain on both sides a hydrophilic group having an ethylene oxide structure, and also contain a hydrophobic group having a propylene oxide structure between the hydrophilic groups.

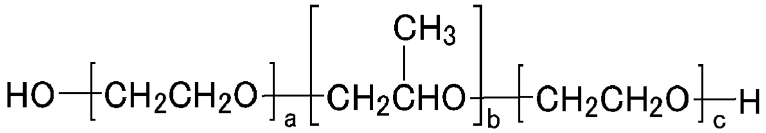

(3)

In formula (3), a, b, and c represent integers.

The degree of polymerization of the polypropylene oxide block (b in formula (3)) and the number of polyethylene oxide units added (a+c in formula (3)) of the Pluronic type nonionic surfactants are not limited, and may be chosen appropriately according to the service conditions, purpose, or other factors. A surfactant with a higher proportion of the polypropylene oxide block tends to have higher affinity for rubber and thus to migrate to the rubber surface at a lower rate.

To suitably control blooming of the nonionic surfactants, the degree of polymerization of the polypropylene oxide block (b in formula (3)) is preferably 10 or higher, more preferably 20 or higher, but is preferably 100 or lower, more

preferably 60 or lower, still more preferably 40 or lower.

For the same reason, the number of polyethylene oxide units added (a+c in formula (3)) is preferably 5 or more, more preferably 15 or more, but is preferably 90 or less, more preferably 50 or less, still more preferably 30 or less.

Commercial products of the Pluronic type nonionic surfactants include Pluronic series available from BASF Japan Ltd., Newpol PE series available from Sanyo Chemical Industries, Ltd., Adeka Pluronic L or F series available from Adeka Corporation, Epan series available from DKS Co. Ltd., and Unilub or Pronon series available from NOF Corporation.

Although it is sufficient that the nonionic surfactants have a SP value of 9.0 or higher, the SP value is preferably 9.1 or higher, more preferably 9.2 or higher, but is preferably 12 or lower, more preferably 11 or lower, still more preferably 10.5 or lower. When the SP value is within the range indicated above, the advantageous effect tends to be better achieved.

Herein, the term "SP value" refers to the solubility parameter calculated based on the structure of the compound by a Hoy method described in, for example, K. L. Hoy, "Table of Solubility Parameters", Solvent and Coatings Materials Research and Development Department, Union Carbites Corp. (1985).

The amount of the nonionic surfactants per 100 parts by mass of the rubber components is preferably 0.1 parts by mass or more, more preferably 0.5 parts by mass or more, still more preferably 1 part by mass or more, but is preferably 4 parts by mass or less, more preferably 2 parts by mass or less. When the amount is within the range indicated above, the flexibility of the bleed layer on the tread surface tends to improve so that the advantageous effect can be better achieved.

The rubber composition may contain one or more solid resins (resins that are solid at room temperature (25°C)).

Any solid resin that is generally used in the tire industry may be used. Examples include styrene resins, C5 resins, C9 resins, terpene resins, rosin resins, coumarone-indene resins, p-t-butylphenol acetylene resins, and acrylic resins. These may be used alone or in combinations of two or more. Styrene resins are preferred among these.

The term "styrene resin" refers to a polymer containing a styrenic monomer as a structural monomer. Examples include polymers polymerized from styrenic monomers as main components (at least 50% by mass). Specific examples include homopolymers polymerized from single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers copolymerized from two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; conjugated dienes such as terpene compounds, chloroprene, butadiene, and isoprene; olefins such as 1-butene and 1-pentene; and α,β-unsaturated carboxylic acids and acid anhydrides thereof such as maleic anhydride. Each of these may be used alone, or two or more of these may be used in combination.

Preferred among the styrene resins are α-methylstyrene resins (e.g., α-methylstyrene homopolymers, copolymers of α-methylstyrene and styrene) or copolymers of styrenic monomers and terpene compounds because then the advantageous effect tends to be better achieved. Also more preferred among the α-methylstyrene resins are copolymers of α-methylstyrene and styrene.

The solid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., ExxonMobil, Cray Valley, etc.

The softening point of the solid resins is preferably 30°C or higher, more preferably 40°C or higher, but is preferably 160°C or lower, more preferably 150°C or lower. When the softening point is within the range indicated above, the advantageous effect tends to be better achieved.

The softening point is determined in accordance with JIS K 6220-1:2001 using a ring and ball softening point measuring apparatus and defined as the temperature at which the ball drops down.

The amount of the solid resins per 100 parts by mass of the rubber components is preferably 1 part by mass or more, more preferably 2 parts by mass or more, still more preferably 3 parts by mass or more, but is preferably 60 parts by mass or less, more preferably 50 parts by mass or less, still more preferably 40 parts by mass or less. When the amount is within the range indicated above, the advantageous effect tends to be better achieved.

According to the present invention, the rubber composition contains one or more liquid plasticizers (plasticizers that are liquid at room temperature (25°C)).

Any liquid plasticizer that is generally used in the tire industry may be used. Examples include oils, liquid resins, and liquid diene polymers. These may be used alone or in combinations of two or more. Oils or liquid resins are preferred among these. According to the present invention at least one liquid resin is used as the liquid plasticizer.

Examples of the oils include process oils, plant oils, and mixtures thereof. Examples of the process oils include paraffinic process oils, aromatic process oils, naphthenic process oils, mild extraction solvates (MES), and treated distillate aromatic extracts (TDAE). Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil,

sunflower oil, palm kernel oil, camellia oil, jojoba oil, macadamia nut oil, tung oil, and oleic acid-containing oils. These may be used alone or in combinations of two or more. Process oils are preferred among these, with aromatic process oils being more preferred.

The oils may be commercially available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc.

Examples of the liquid resins include low molecular weight resins corresponding to the examples of the solid resins described above. Liquid coumarone-indene resins are preferred among these.

The term "liquid coumarone-indene resin" refers to a polymer containing coumarone and indene as structural monomers, and examples include liquid polymers polymerized from these monomers as main components (at least 50% by mass). Examples of monomer components which may be contained in the backbone in addition to coumarone and indene include styrene, $\alpha$-methylstyrene, methylindene, and vinyltoluene.

The liquid resins may be commercially available from Rutgers Chemicals, Cray Valley, etc.

The softening point of the liquid resins is preferably 1°C or higher, more preferably 5°C or higher, but is preferably 40°C or lower, more preferably 30°C or lower. When the softening point is within the range indicated above, the advantageous effect tends to be better achieved.

The amount of the liquid plasticizers per 100 parts by mass of the rubber components is preferably 2 parts by mass or more, more preferably 3 parts by mass or more, but is preferably 60 parts by mass or less, more preferably 50 parts by mass or less. When the amount is within the range indicated above, the advantageous effect tends to be better achieved.

The rubber composition may contain inorganic fillers other than silica. This provides better wet grip performance.

Examples of the inorganic fillers include aluminum hydroxide, alumina, zirconium oxide, magnesium sulfate, aluminum silicate, potassium carbonate, and silicon carbide. Each of these may be used alone, or two or more of these may be used in combination. Aluminum hydroxide and magnesium sulfate are preferred among these, with aluminum hydroxide being more preferred.

The nitrogen adsorption specific surface area ($N_2SA$) of the aluminum hydroxide is preferably 5 $m^2/g$ or more, more preferably 10 $m^2/g$ or more, but is preferably 60 $m^2/g$ or less, more preferably 50 $m^2/g$ or less. When the $N_2SA$ is within the range indicated above, the advantageous effect tends to be better achieved.

The $N_2SA$ of the aluminum hydroxide is measured by a BET method in accordance with ASTM D3037-81.

The inorganic fillers may be commercially available from Nabaltec, FUJIFILM Wako Pure Chemical Corporation, etc.

The amount of the inorganic fillers (inorganic fillers other than silica) per 100 parts by mass of the rubber components is preferably 1 part by mass or more, more preferably 2 parts by mass or more, but is preferably 50 parts by mass or less, more preferably 40 parts by mass or less. When the amount is within the range indicated above, the advantageous effect tends to be better achieved.

The rubber composition may contain one or more waxes.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes being more preferred.

The waxes may be commercially available from Ouchi Shinko Chemical Industrial Co., Ltd., Nippon Seiro Co., Ltd., Seiko Chemical Co., Ltd., etc.

The amount of the waxes per 100 parts by mass of the rubber components is preferably 0.7 parts by mass or more, more preferably 1.0 part by mass or more, but is preferably 15 parts by mass or less, more preferably 10 parts by mass or less. When the amount is within the range indicated above, the advantageous effect tends to be better achieved.

The rubber composition may contain one or more antioxidants.

Examples of the antioxidants include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and/or quinoline antioxidants.

The antioxidants may be commercially available from Seiko Chemical Co., Ltd., Sumitomo Chemical Co., Ltd., Ouchi Shinko Chemical Industrial Co., Ltd., Flexsys, etc.

The amount of the antioxidants per 100 parts by mass of the rubber components is preferably 1 part by mass or more, more preferably 2 parts by mass or more, but is preferably 10 parts by mass or less, more preferably 8 parts by mass or less. When the amount is within the range indicated above, the advantageous effect tends to be better achieved.

The rubber composition may contain one or more fatty acids, preferably stearic acid.

The stearic acid may be conventional ones, e.g., available from NOF Corporation, KAO Corporation, FUJIFILM Wako Pure Chemical Corporation, Chiba Fatty Acid Co., Ltd., etc.

The amount of the fatty acids (preferably stearic acid) per 100 parts by mass of the rubber components is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain zinc oxide.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The amount of the zinc oxide, if present, per 100 parts by mass of the rubber components is preferably 1 part by mass or more, more preferably 2 parts by mass or more, but is preferably 10 parts by mass or less, more preferably 5 parts by mass or less. When the amount is within the range indicated above, the advantageous effect tends to be better achieved.

The rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of the sulfur per 100 parts by mass of the rubber components is preferably 0.1 parts by mass or more, more preferably 0.5 parts by mass or more, but is preferably 1.5 parts by mass or less, more preferably 1.1 parts by mass or less. When the amount is within the range indicated above, the advantageous effect tends to be better achieved.

The rubber composition may contain one or more hybrid crosslinking agents. This can further improve abrasion resistance while maintaining good wet grip performance.

Examples of the hybrid crosslinking agents include 1,3-bis(citraconimidomethyl)benzene and compounds represented by the formula ($\alpha$) below. These may be used alone or in combinations of two or more.

$$B^1\text{-S-S-A-S-S-}B^2 \qquad (\alpha)$$

In formula ($\alpha$), A represents a C2-C10 alkylene group, and $B^1$ and $B^2$ are the same as or different from each other and each represent a nitrogen atom-containing monovalent organic group.

The (C2-C10) alkylene group as A is not limited, and examples include linear, branched, and cyclic alkylene groups. Linear alkylene groups are preferred among these. The number of carbon atoms is preferably 4 to 8. Specific examples of the alkylene group include ethylene, trimethylene, tetramethylene, pentamethylene, hexamethylene, heptamethylene, octamethylene, and decamethylene groups. Preferred among these is a hexamethylene group.

$B^1$ and $B^2$ may each be any nitrogen atom-containing monovalent organic group which preferably contains at least one aromatic ring and more preferably contains a linking group represented by N-C(=S)- where the carbon atom is bound to the dithio group. $B^1$ and $B^2$ may be the same as or different from each other, preferably the same.

Examples of the compounds of formula ($\alpha$) include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. Each of these may be used alone, or two or more of these may be used in combination. Preferred among these is 1,6-bis(N,N'-dibenzylthiocarbamoyldithio)hexane.

The hybrid crosslinking agents may be commercially available from Lanxess, etc.

The amount of the hybrid crosslinking agents per 100 parts by mass of the rubber components is preferably 0.5 parts by mass or more, more preferably 1.5 parts by mass or more, but is preferably 4 parts by mass or less, more preferably 3 parts by mass or less. When the amount is within the range indicated above, the advantageous effect tends to be better achieved.

The rubber composition may contain one or more vulcanization accelerators.

Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl) thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or

more. Sulfenamide, guanidine, and thiuram vulcanization accelerators are preferred among these.

The vulcanization accelerators may be commercially available from Kawaguchi Chemical Industry Co., Ltd., Ouchi Shinko Chemical Industrial Co., Ltd., Sanshin Chemical Industry Co., Ltd., etc.

The amount of the vulcanization accelerators per 100 parts by mass of the rubber components is preferably 1 part by mass or more, more preferably 2 parts by mass or more, but is preferably 10 parts by mass or less, more preferably 8 parts by mass or less, still more preferably 6 parts by mass or less. When the amount is within the range indicated above, the advantageous effect tends to be better achieved.

In addition to the above-mentioned components, the rubber composition may further contain additives commonly used in the tire industry, such as organic peroxides. The amount of these additives is preferably 0.1 to 200 parts by mass per 100 parts by mass of the rubber components.

The rubber composition may be prepared, for example, by kneading the components using a rubber kneading machine such as an open roll mill or a Banbury mixer, and then vulcanizing the kneaded mixture as appropriate.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading the vulcanizing agents and vulcanization accelerators is usually vulcanized by press vulcanization, for example. The vulcanization temperature for passenger car tires is usually 140 to 190°C, preferably 150 to 185°C, and the vulcanization temperature for truck and bus tires is usually 130 to 160°C, preferably 135 to 155°C. The vulcanization time for passenger car tires is usually 5 to 15 minutes, and the vulcanization time for truck and bus tires is usually 25 to 60 minutes.

The rubber composition is for use in treads of tires. For a tread including a cap tread and a base tread, the rubber composition may be suitably used in the cap tread.

The tire (e.g., pneumatic tire) of the present disclosure may be produced from the above-described rubber composition by usual methods. Specifically, the rubber composition before vulcanization may be extruded into the shape of a tread and then assembled with other tire components in a tire building machine in a usual manner to build an unvulcanized tire, which may then be heated and pressurized in a vulcanizer to produce a tire.

It is sufficient that the tread of the tire at least partially includes the rubber composition. The entire tread may include the rubber composition.

The tire of the present disclosure may be produced from the above-described rubber composition by usual methods. Specifically, the rubber composition before vulcanization may be extruded into the shape of a tread and then assembled with other tire components in a tire building machine in a usual manner to build an unvulcanized tire, which may then be heated and pressurized in a vulcanizer to produce a tire.

The tire (e.g., pneumatic tire) may be used as any of the following tires: tires for passenger cars; tires for trucks and buses; tires for two-wheeled vehicles; high performance tires; winter tires such as studless winter tires; run-flat tires provided with side reinforcing layers; noise absorber-equipped tires which include a noise absorber such as sponge on the tire inner cavity; sealant-attached tires which include a sealant capable of sealing punctures either inside the tire or on the tire inner cavity; electronic component-equipped tires which include an electronic component such as a sensor or a radio tag either inside the tire or on the tire inner cavity, etc. The tire is suitable for passenger cars.

## EXAMPLES

The present disclosure is specifically described with reference to, but not limited to, examples.

The chemicals used in the examples and comparative examples are listed below.

<SBR 1>
N9548 (E-SBR, oil extended (oil content: 37.5 parts by mass per 100 parts by mass of rubber solids), styrene content: 35% by mass, vinyl content: 18% by mass, Tg: -40°C, Mw: 1,090,000) available from Zeon Corporation
<SBR 2>
NS612 (S-SBR, non-oil extended, styrene content: 15% by mass, vinyl content: 30% by mass, Tg: -65°C, Mw: 780,000) available from Zeon Corporation
<BR>
CB25 (BR synthesized using Nd catalyst (Nd-catalyzed BR, cis content: 97% by mass, vinyl content: 0.7% by mass, Tg: -110°C) available from Lanxess
<Carbon black>
SHOBLACK N220 ($N_2SA$: 114 $m^2/g$) available from Cabot Japan K.K.
<Aluminum hydroxide>
Apyral 200SM ($N_2SA$: 15 $m^2/g$) available from Nabaltec
<Silica 1>

ULTRASIL VN3 ($N_2SA$: 175 $m^2/g$) available from Evonik Degussa
<Silica 2>
Z1085Gr ($N_2SA$: 80 $m^2/g$) available from Solvay
<Silica 3>
ULTRASIL 9000GR ($N_2SA$: 240 $m^2/g$) available from Evonik Degussa
<Silane coupling agent 1>
Si75 (bis(3-triethoxysilylpropyl)disulfide), sulfur content: 14.4% by mass) available from Evonik Degussa
<Silane coupling agent 2>
Si69 (bis(3-triethoxysilylpropyl)tetrasulfide), sulfur content: 22.5% by mass) available from Evonik Degussa
<Silane coupling agent 3>
NXT-Z45 (sulfur content: 3.3% by mass) available from Momentive
<Solid resin>
Sylvatraxx 4401 (copolymer of α-methylstyrene and styrene, softening point: 85°C) available from Arizona Chemical
<Liquid resin>
Novares C10 (liquid coumarone-indene resin, softening point: 10°C) available from Rutgers Chemicals
<Amide compound 1>
WB16 (mixture of fatty acid calcium salt, fatty acid amide, and fatty acid amide ester) available from Struktol
<Amide compound 2>
oleamide available from NOF Corporation
<Surfactant>
NEWPOL PE-64 (Pluronic type nonionic surfactant, PEG/PPG-25/30 copolymer, formula (3) where a+c = 25 and b = 30, SP value: 9.2) available from Sanyo Chemical Industries, Ltd.
<Paraffin wax>
Ozoace 0355 available from Nippon Seiro Co., Ltd.
<Stearic acid>
stearic acid "TSUBAKI" available from NOF Corporation
<Fatty acid zinc salt>
EF44 available from Struktol
<Oil>
Diana process AH-24 (aromatic process oil) available from Idemitsu Kosan Co., Ltd.
<Antioxidant 6PPD>
Vulcanox 4020 (N-phenyl-N'-(1,3-dimethylbutyl)-p-phenylenediamine) available from Lanxess
<Antioxidant TMQ>
Vulkanox HS (2,2,4-trimethyl-1,2-dihydroquinoline polymer) available from Lanxess
<Zinc oxide>
zinc oxide #2 available from Mitsui Mining & Smelting Co., Ltd.
<Sulfur>
HK200-5 (5% oil-containing powdered sulfur) available from Hosoi Chemical Industry Co., Ltd.
<Sulfenamide vulcanization accelerator>
NOCCELER CZ (N-cyclohexyl-2-benzothiazolylsulfenamide) available from Ouchi Shinko Chemical Industrial Co., Ltd.
<Thiuram vulcanization accelerator>
Sanceler TBZTD (tetrabenzylthiuram disulfide) available from Sanshin Chemical Industry Co., Ltd.
<Hybrid crosslinking agent>
Vulcuren VP KA9188 (1,6-bis(N,N'-dibenzylthiocarbamoyldithio)hexane) available from Lanxess
<Guanidine vulcanization accelerator>
NOCCELER D (diphenylguanidine) available from Ouchi Shinko Chemical Industrial Co., Ltd.

(Examples and Comparative Examples)

According to each formulation shown in Table 1, the materials other than the vulcanizing agents (sulfur, vulcanization accelerators, and hybrid crosslinking agent) were kneaded using a 1.7 L Banbury mixer (Kobe Steel, Ltd.) at 140°C for five minutes to obtain a kneaded mixture. Next, the vulcanizing agents were added to the kneaded mixture, and they were kneaded in an open roll mill at 80°C for five minutes to obtain an unvulcanized rubber composition. It should be noted that only in Example 11, the silane coupling agent 2 (Si69) was used as a vulcanizing agent.

The unvulcanized rubber compositions prepared as above were each formed into the shape of a tread and assembled with other tire components to build an unvulcanized tire, followed by press vulcanization at 170°C for 12 minutes to prepare a test tire (size: 195/65R15). The test tires prepared as above were evaluated as described below.

Table 1 shows the results.

(Sulfur content after acetone extraction)

Specimens cut out from the tread of each test tire were set in a Soxhlet extractor and subjected to acetone extraction under the following conditions: specimen: 10 g or less, acetone: 150 ml, thermostatic bath temperature: 95 to 100°C, and extraction time: 24 to 72 hours. Then, the acetone-extracted specimens were placed and heated in an oven at 100°C for 30 minutes to remove the solvent from the specimens. The sulfur content of the resulting specimens was determined by an oxygen combustion flask method in accordance with JIS K6233:2016.

(Ash content)

Specimens cut out from the tread of each test tire were placed in an alumina crucible and then heated in an electric furnace at 550°C for four hours. Thereafter, the ash content (% by mass) was calculated using the equation:

(Mass of specimen after heating)/(Mass of specimen before heating) $\times$ 100.

(Abrasion resistance)

The test tires were mounted on each wheel of a front-engine, front-wheel-drive car of 2,000 cc displacement made in Japan. After a distance of 8,000 km, the groove depth in the tire tread portion was measured. A distance that caused a 1 mm decrease in tire groove depth was calculated and expressed as an index (abrasion resistance index) relative to Comparative Example 1 (= 100). A higher index indicates a longer distance and better abrasion resistance. An index of 110 or higher is considered good.

<Wet grip performance>

The test tires were mounted on each wheel of a front-engine, front-wheel-drive car of 2,000 cc displacement made in Japan. The braking distance of the car with an initial speed of 100 km/h on a wet asphalt road was determined and expressed as an index (wet grip performance index) relative to Comparative Example 1 (= 100). A higher index indicates a shorter braking distance and better wet grip performance. An index of 100 or higher is considered good.

[Table 1]

Table 1 demonstrates inventive example 13, reference examples 1 to 12 and comparative examples 1 to 5.

| | | Comparative Example | | | | | Example | | | | | | | | | | | | |
|---|---|---|---|---|---|---|---|---|---|---|---|---|---|---|---|---|---|---|---|
| | | 1 | 2 | 3 | 4 | 5 | 1 | 2 | 3 | 4 | 5 | 6 | 7 | 8 | 9 | 10 | 11 | 12 | 13 |
| Formulation (parts by mass) | SBR1 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 |
| | SBR2 | 50 | 50 | 50 | 50 | 50 | 50 | 50 | 50 | 50 | 50 | 50 | 50 | 50 | 50 | 50 | 50 | 50 | 50 |
| | BR | 20 | 20 | 20 | 20 | 20 | 20 | 20 | 20 | 20 | 20 | 20 | 20 | 20 | 20 | 20 | 20 | 20 | 20 |
| | Carbon black | 5 | 19 | 5 | 5 | 5 | 5 | 5 | 5 | 5 | 5 | 5 | 5 | 5 | 5 | 5 | 5 | 10 | 5 |
| | Aluminum hydroxide | | | | | | | | | | | | | | 10 | 20 | | | 20 |
| | Silica 1 | 100 | 80 | 80 | 100 | 120 | 100 | 100 | 120 | | 100 | 100 | 100 | 100 | 100 | 100 | 100 | 100 | 100 |
| | Silica 2 | | | | | | | | | 100 | | | | | | | | | |
| | Silica 3 | | | | | | | | | 40 | | | | | | | | | |
| | Silane coupling agent 1 | 8 | 6.4 | 6.4 | 8 | 9.6 | 8 | | 9.6 | 9.6 | 8 | 8 | 8 | 8 | 8 | 8 | 8 | 8 | 8 |
| | Silane coupling agent 2 | | | | | | | 4 | | | | | | | | | 2 | | |
| | Silane coupling agent 3 | | | | | | | 4 | | | | | | | | | | | |
| | Solid resin | 10 | 10 | 10 | 10 | 10 | 10 | 10 | 10 | 10 | 10 | 10 | 10 | 10 | 10 | 10 | 10 | 10 | 10 |
| | Liquid resin | | | | | | | | | | | | | | | | | | 18 |
| | Amide compound 1 | 2 | 2 | 2 | 2 | 2 | 2 | 2 | 2 | 2 | 2 | | | | 2 | 2 | 2 | 2 | 2 |
| | Amide compound 2 | | | | | | | | | | | 2 | | | | | | | |
| | Surfactant | | | | | | | | | | | | 2 | | | | | | |
| | Paraffin wax | 1.76 | 1.76 | 1.76 | 1.76 | 1.76 | 1.76 | 1.76 | 1.76 | 1.76 | 1.76 | 1.76 | 1.76 | 1.76 | 1.76 | 1.76 | 1.76 | 1.76 | 1.76 |
| | Stearic acid | 3 | 3 | 3 | 3 | 3 | 3 | 3 | 3 | 3 | 3 | 3 | 3 | 3 | 3 | 3 | 3 | 3 | 3 |
| | Fatty acid zinc salt | | | | | | | | | | | | | 2 | | | | | |
| | Oil | 14 | 14 | 6 | 14 | 14 | 14 | 14 | 34 | 34 | 14 | 14 | 14 | 14 | 14 | 14 | 14 | 24 | 0 |
| | Antioxidant 6PPD | 3 | 2 | 2 | 2 | 2 | 2 | 2 | 2 | 2 | 2 | 2 | 2 | 2 | 2 | 2 | 2 | 2 | 2 |
| | Antioxidant TMQ | 1 | 1 | 1 | 1 | 1 | 1 | 1 | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 | 2 | 2 | 2 | 2 | 2 | 2 | 2 |
| | Sulfur | 1.30 | 1.20 | 1.50 | 1.80 | 1.80 | 0.80 | 0.80 | 0.50 | 0.50 | 0.40 | 0.80 | 0.80 | 0.80 | 0.40 | 0.40 | 0.80 | 0.80 | 0.40 |
| | Sulfenamide vulcanization accelerator | 2.5 | 2.5 | 2 | 1.8 | 1.8 | 2.5 | 2.5 | 2.5 | 2.5 | 2 | 2.5 | 2.5 | 2.5 | 2 | 2 | 2.5 | 2.5 | 2 |
| | Thiuram vulcanization accelerator | | | | | | | | 1 | 1 | 0.5 | | | | 0.5 | 0.5 | | | 0.5 |
| | Hybrid crosslinking agent | | | | | | | | | | 1.5 | | | | 1.5 | 1.5 | | | 1.5 |
| | Guanidine vulcanization accelerator | 2 | 2 | 2 | 2 | 3 | 3 | 1 | | | | 3 | 3 | 3 | 3 | 3 | 2 | 3 | 3 |
| Sulfur content after acetone extraction (% by mass) | | 1.13 | 1.09 | 1.21 | 1.25 | 1.24 | 0.96 | 0.92 | 0.89 | 0.84 | 0.98 | 0.96 | 0.96 | 0.96 | 0.93 | 0.90 | 0.98 | 0.92 | 0.89 |
| Ash content (% by mass) | | 38.27 | 31.81 | 34.80 | 38.44 | 42.36 | 38.34 | 38.63 | 39.95 | 43.64 | 38.61 | 38.30 | 38.30 | 38.38 | 40.41 | 42.48 | 38.20 | 36.29 | 41.90 |
| Evaluation | Abrasion resistance index (Target: 110 or higher) | 100 | 110 | 104 | 87 | 92 | 110 | 118 | 110 | 110 | 130 | 113 | 110 | 110 | 121 | 113 | 113 | 110 | 119 |
| | Wet grip performance index (Target: 100 or higher) | 100 | 88 | 90 | 100 | 114 | 101 | 102 | 112 | 114 | 102 | 101 | 104 | 101 | 110 | 120 | 101 | 101 | 127 |
| | Overall performance (Average of indices) | 100 | 99 | 97 | 93.5 | 103 | 105.5 | 110 | 111 | 112 | 116 | 107 | 107 | 105.5 | 115.5 | 116.5 | 107 | 105.5 | 123 |

Table 1 shows that both the abrasion resistance and wet grip performance exceeded the respective target values and the overall performance in terms of these properties (the average of the indices) was greatly improved in the examples including a tread containing a rubber composition which contained at least one rubber component and at least one silane coupling agent having a sulfur content of 10% by mass or higher, and which had an ash content of 36% by mass or higher and further had a sulfur content of 1.0% by mass or lower when measured after acetone extraction.

## Claims

**1.** A tire, comprising a tread comprising a rubber composition,

the rubber composition comprising at least one rubber component and at least one silane coupling agent having a sulfur content of 10% by mass or higher and at least one liquid resin,
the rubber composition having an ash content of 36% by mass or higher,
the rubber composition having a sulfur content of 1.0% by mass or lower when measured after acetone extraction,
wherein the ash content and the sulfur content are determined by the methods defined in the description.

**2.** The tire according to claim 1,
wherein the sulfur content of the rubber composition is 0.90% by mass or lower.

**3.** The tire according to claim 1 or 2,
wherein an amount of silica in the rubber composition is 110 parts by mass or more per 100 parts by mass of the at least one rubber component.

**4.** The tire according to any one of claims 1 to 3,
wherein the silane coupling agent has a polysulfide group.

**5.** The tire according to any one of claims 1 to 4,
wherein an amount of carbon black in the rubber composition is 10 parts by mass or less per 100 parts by mass of the at least one rubber component.

**6.** The tire according to any one of claims 1 to 5,

wherein an amount of at least one nonionic surfactant having a SP value of 9.0 or higher or at least one amide compound in the rubber composition is 0.1 parts by mass or more per 100 parts by mass of the at least one rubber component.

**7.** The tire according to any one of claims 1 to 6,
wherein the rubber composition comprises at least one inorganic filler selected from the group consisting of aluminum hydroxide, alumina, zirconium oxide, magnesium sulfate, aluminum silicate, potassium carbonate, and silicon carbide.

**8.** The tire according to any one of claims 1 to 7,
wherein the rubber composition comprises at least one solid resin.

## Patentansprüche

**1.** Reifen, umfassend einen Laufstreifen, der eine Kautschukzusammensetzung umfasst,

wobei die Kautschukzusammensetzung mindestens eine Kautschukkomponente und mindestens ein Silankopplungsmittel mit einem Schwefelgehalt von 10 Massen-% oder höher und mindestens ein flüssiges Harz umfasst,
wobei die Kautschukzusammensetzung einen Aschegehalt von 36 Massen-% oder höher aufweist,
wobei die Kautschukzusammensetzung einen Schwefelgehalt von 1,0 Massen-% oder niedriger aufweist, wenn nach Aceton-Extraktion gemessen,
wobei der Aschegehalt und der Schwefelgehalt durch die in der Beschreibung definierten Verfahren bestimmt sind.

**2.** Reifen nach Anspruch 1,
wobei der Schwefelgehalt der Kautschukzusammensetzung 0,90 Massen-% oder niedriger ist.

**3.** Reifen nach Anspruch 1 oder 2,
wobei eine Menge an Siliziumdioxid in der Kautschukzusammensetzung 110 Massenteile oder mehr pro 100 Massenteile der mindestens einen Kautschukkomponente beträgt.

**4.** Reifen nach einem der Ansprüche 1 bis 3,
wobei das Silankopplungsmittel eine Polysulfidgruppe aufweist.

**5.** Reifen nach einem der Ansprüche 1 bis 4,
wobei eine Menge an Ruß in der Kautschukzusammensetzung 10 Massenteile oder weniger pro 100 Massenteile der mindestens einen Kautschukkomponente beträgt.

**6.** Reifen nach einem der Ansprüche 1 bis 5,
wobei eine Menge mindestens eines nicht-ionischen Tensids mit einem SP-Wert von 9,0 oder höher oder mindestens einer Amidverbindung in der Kautschukzusammensetzung 0,1 Massenteile oder mehr pro 100 Massenteile der mindestens einen Kautschukkomponente beträgt.

**7.** Reifen nach einem der Ansprüche 1 bis 6,
wobei die Kautschukzusammensetzung mindestens einen organischen Füllstoff umfasst, welcher ausgewählt ist aus der Gruppe bestehend aus Aluminiumhydroxid, Aluminiumoxid, Zirkoniumoxid, Magnesiumsulfat, Aluminiumsilikat, Kaliumcarbonat und Siliziumkarbid.

**8.** Reifen nach einem der Ansprüche 1 bis 7,
wobei die Kautschukzusammensetzung mindestens ein festes Harz umfasst.

## Revendications

**1.** Pneumatique, comprenant une bande de roulement comprenant une composition de caoutchouc,

la composition de caoutchouc comprenant au moins un composant de caoutchouc et au moins un agent de

couplage silane ayant une teneur en soufre de 10 % ou plus et au moins une résine liquide,
la composition de caoutchouc ayant une teneur en cendres de 36 % en masse ou plus,
la composition de caoutchouc ayant une teneur en soufre de 1,0 % en masse ou moins lorsqu'elle est mesurée après extraction à l'acétone, dans lequel la teneur en cendres et la teneur en soufre sont déterminées par les procédés définis dans la description.

**2.** Pneumatique selon la revendication 1,
dans lequel la teneur en soufre de la composition de caoutchouc est de 0,90 % en masse ou moins.

**3.** Pneumatique selon la revendication 1 ou 2,
dans lequel une quantité de silice dans la composition de caoutchouc est de 110 parties en masse ou plus par 100 parties en masse de l'au moins un composant de caoutchouc.

**4.** Pneumatique selon l'une quelconque des revendications 1 à 3,
dans lequel l'agent de couplage silane comporte un groupe polysulfure.

**5.** Pneumatique selon l'une quelconque des revendications 1 à 4, dans lequel une quantité de noir de charbon dans la composition de caoutchouc est de 10 parties en masse ou moins par 100 parties en masse de l'au moins un composant de caoutchouc.

**6.** Pneumatique selon l'une quelconque des revendications 1 à 5, dans lequel une quantité d'au moins un tensioactif non ionique ayant une valeur SP de 9,0 ou plus ou au moins d'un composé amide dans la composition de caoutchouc est de 0,1 partie en masse ou plus par 100 parties en masse de l'au moins un composant de caoutchouc.

**7.** Pneumatique selon l'une quelconque des revendications 1 à 6, dans lequel la composition de caoutchouc comprend au moins une charge inorganique choisie dans le groupe constitué par l'hydroxyde d'aluminium, l'alumine, l'oxyde de zirconium, le sulfate de magnésium, le silicate d'aluminium, le carbonate de potassium, et le carbure de silicium.

**8.** Pneumatique selon l'une quelconque des revendications 1 à 7, dans lequel la composition de caoutchouc comprend au moins une résine solide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016052340 A1
- US 2018371216 A1
- WO 2018105230 A1
- JP 6033786 B
- JP 2012122015 A